# EUROPEAN PATENT APPLICATION

(11) **EP 4 848 056 A1**
(43) Date of publication of application: **02.12.2026**
(21) Application number: 25744743.3
(22) Date of filing: 24.01.2025
(51) Int. Cl.: G06F 3/04842

(54) **INTERACTION METHOD AND APPARATUS, DEVICE AND STORAGE MEDIUM**

(30) Priority: 24.01.2024 CN 202410102809
(71) Applicant: Beijing Zitiao Network Technology Co., Ltd., Beijing 100190 (CN)
(72) Inventor: TANG, Yihang, Beijing 100028 (CN); TU, Wei, Beijing 100028 (CN); CAO, Bing, Beijing 100028 (CN)
(74) Representative: Marks & Clerk LLP
(86) International application number: PCT/CN2025/074883
(87) International publication number: WO 2025/157280

(57) **Abstract**

Embodiments of the disclosure relate to a method, an apparatus, a device, and a storage medium for interaction. The method proposed herein includes: receiving a query request from a user; displaying a plurality of interactive questions associated with the query request, wherein the plurality of interactive questions is generated based on the query request; and providing target response content for the query request, the target response content being generated based on the query request and answer information for the plurality of interactive questions. In this way, the target response content generated by embodiments of the disclosure has higher accuracy and better meets the user's needs, and the user's interaction experience may be effectively improved.

## Description

The present application claims priority to Chinese Patent Application No. 202410102809.9, filed on January 24, 2024 and entitled "METHOD, APPARATUS, DEVICE, AND STORAGE MEDIUM FOR INTERACTION", which is incorporated herein by reference in its entirety.

### FIELD

Example embodiments of the disclosure generally relate to the field of computers, and in particular, to a method, an apparatus, a device, and a computer-readable storage medium for interaction.

### BACKGROUND

With the development of computer technologies, the Internet has become an important platform for people to have information interaction. In the process of information interaction of people via the Internet, corresponding response content may be obtained based on a query request, and how to provide appropriate response content for users is a focus of attention.

### SUMMARY

In a first aspect of the present disclosure, a method for interaction is provided. The method includes: receiving a query request from a user; displaying a plurality of interactive questions associated with the query request, wherein the plurality of interactive questions is generated based on the query request; and providing target response content for the query request, the target response content being generated based on the query request and answer information for the plurality of interactive questions.

In a second aspect of the present disclosure, an apparatus for interaction is provided. The apparatus includes: a reception module configured to receive a query request from a user; a display module configured to display a plurality of interactive questions associated with the query request, where the plurality of interactive questions is generated based on the query request; and a provision module configured to provide target response content for the query request, the target response content being generated based on the query request and answer information for the plurality of interactive questions.

In a third aspect of the present disclosure, an electronic device is provided. The device includes at least one processor; and at least one memory, the at least one memory being coupled to the at least one processor and storing instructions executable by the at least one processor. The instructions, when executed by the at least one processor, cause the device to perform the method of the first aspect.

In a fourth aspect of the present disclosure, a computer-readable storage medium is provided. The computer-readable storage medium has computer-executable instructions stored thereon, the computer-executable instructions being executable by a processor to implement the method of the first aspect.

In a fifth aspect of the present disclosure, a computer program product is provided. The computer program product includes computer-executable instructions, the computer-executable instructions, when executed by a processor, implement the method of the first aspect.

It should be understood that the content described in this section of the present disclosure is not intended to limit the key features or important features of the embodiments of the present disclosure, nor to limit the scope of the present disclosure. Other features of the present disclosure will become easy to understand through the following description.

### BRIEF DESCRIPTION OF THE DRAWINGS

The above and other features, advantages, and aspects of embodiments of the present disclosure will become more apparent in combination with the drawings and with reference to the following detailed description. In the drawings, the same or similar reference symbols refer to the same or similar elements, where:
FIG. 1 illustrates a schematic diagram of an example environment in which embodiments of the present disclosure may be implemented;
FIG. 2 illustrates a flowchart of an example process for interaction according to some embodiments of the present disclosure;
FIG. 3 illustrates an example interface according to some embodiments of the present disclosure;
Figs. 4A to 4B illustrate example interfaces according to some embodiments of the present disclosure;
FIG. 5 illustrates a schematic structural block diagram of an example apparatus for interaction according to some embodiments of the present disclosure; and
FIG. 6 illustrates a block diagram of an electronic device capable of implementing a plurality of embodiments of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms, and should not be interpreted as being limited to the embodiments set forth herein. On the contrary, these embodiments are provided for a more thorough and complete understanding of the present disclosure. It should be understood that the drawings and embodiments of the present disclosure are only for illustrative purposes, and are not intended to limit the protection scope of the present disclosure.

It should be noted that the titles of any section/sub-section provided herein are not restrictive. Various embodiments are described throughout this article, and any type of embodiment may be included under any section/sub-section. In addition, the embodiments described in any section/sub-section may be combined with any other embodiments described in the same section/sub-section and/or different section/sub-section in any way.

In the description of the embodiments of the present disclosure, the term "include/comprise" and similar terms should be understood as open-ended inclusions, that is, "include/comprise but not limited to". The term "based on" should be understood as "at least partially based on". The term "an embodiment" or "the embodiment" should be understood as "at least one embodiment". The term "some embodiments" should be understood as "at least some embodiments". The following may also include other explicit and implicit definitions. The terms "first", "second", etc. may refer to different or same objects. The following may also include other explicit and implicit definitions.

The embodiments of the present disclosure may involve user data, data acquisition and/or use, etc. These aspects all follow the corresponding laws, regulations and related provisions. In the embodiments of the present disclosure, the collection, acquisition, processing, forwarding, use, etc. of all data are carried out on the premise that the user is aware and confirms. Accordingly, when implementing the embodiments of the present disclosure, the user should be informed of the type, scope of use, use scenarios, etc. of the data or information that may be involved in an appropriate manner in accordance with relevant laws and regulations, and the authorization of the user should be obtained. The specific manner of informing and/or authorizing may vary according to the actual situation and application scenarios, and the scope of the present disclosure is not limited in this regard.

If the solutions in this specification and the embodiments involve personal information processing, the processing will be carried out on the premise that there is a legal basis (for example, the consent of the personal information subject is obtained, or it is necessary for the performance of a contract, etc.), and the processing will only be carried out within the scope of the provisions or agreements. If the user refuses to process personal information other than the necessary information required for the basic functions, it will not affect the user's use of the basic functions.

In the process of people's information interaction via the Internet, the traditional response content is often too single, which affects the user's interaction experience.

An embodiment of the present disclosure proposes an interaction solution. The solution may receive a query request from a user; a plurality of interactive questions associated with the query request may be displayed, where the plurality of interactive questions are generated based on the query request; and target response content for the query request may be provided, the target response content being generated based on the query request and answer information for the plurality of interactive questions.

According to the embodiments of the present disclosure, the target response content is generated based on the answer information of the plurality of interactive questions input by the user and the query request. The answer information of the plurality of interactive questions includes more query detail information, thereby improving the accuracy of the generated target response content. In addition, the target response content better meets the user's needs, and the user's interaction experience is also improved.

Various example implementations of the solution will be described in detail below in further conjunction with the drawings.

### Example Environment

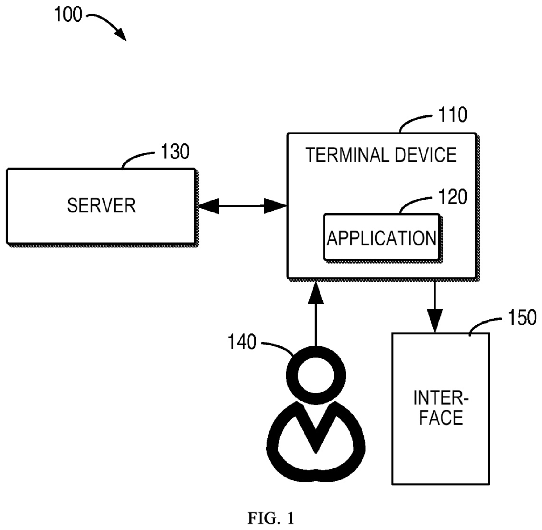

FIG. 1 illustrates a schematic diagram of an example environment 100 in which embodiments of the present disclosure may be implemented. As shown in FIG. 1, the example environment 100 may include an electronic device 110.

In this example environment 100, the electronic device 110 may run an application 120 supporting interface interaction. The application 120 may be any appropriate type of application for interface interaction, examples of which may include but are not limited to: video applications, social applications, or other appropriate applications. A user 140 may interact with the application 120 via the electronic device 110 and/or its attachment devices. As an example, the user may input a query request based on the application 120. The electronic device may provide the user with target response content for this query request.

In the environment 100 of FIG. 1, if the application 120 is active, the electronic device 110 may present an interface 150 for supporting interface interaction through the application 120.

In some embodiments, the electronic device 110 communicates with the server 130 to implement the supply of services for the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a game device, or any combination of the above, including the accessories and peripherals of these devices or any combination thereof. In some embodiments, the electronic device 110 may also support any type of interface for the user (such as a "wearable" circuit, etc.).

The server 130 may be an independent physical server, a server cluster or a distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, etc. The server 130 may provide background services for the application 120 supporting interface interaction in the electronic device 110.

A communication connection may be established between the server 130 and the electronic device 110. The communication connection may be established in a wired or wireless manner. The communication connection may include but not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may achieve signaling interaction through the communication connection between them.

It should be understood that the structure and function of each element in the environment 100 are described only for the purpose of illustration, without suggesting any limitation to the scope of the present disclosure.

Some example embodiments of the present disclosure will be described below with continued reference to the drawings.

### Example Process

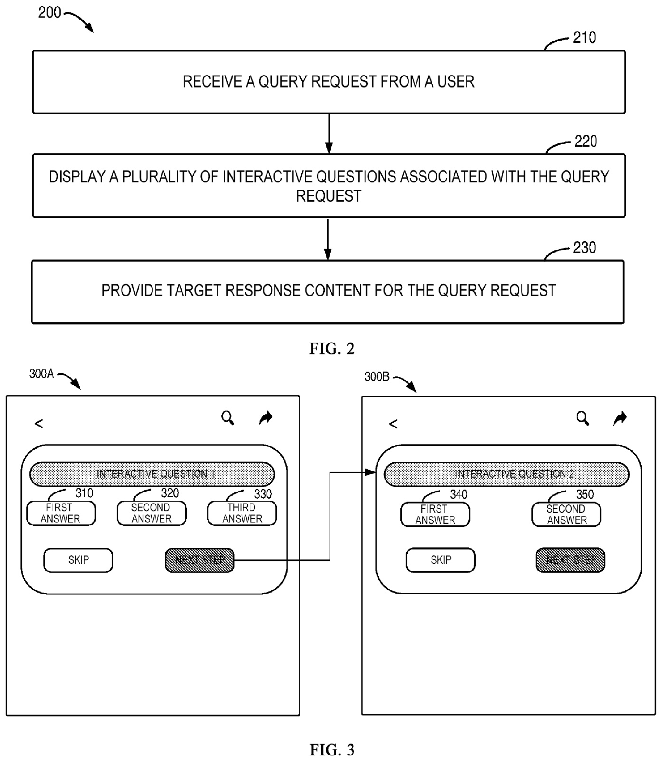

FIG. 2 illustrates a flowchart of an example process 200 for interaction according to some embodiments of the present disclosure. The process 200 may be implemented at the electronic device 110. The process 200 will be described below with reference to FIG. 1.

As shown in FIG. 2, at a block 210, the electronic device 110 receives a query request from a user.

In some embodiments, the query request may be a query request based on a specific topic, and the specific topic may involve any appropriate field such as the medical field, the legal field, etc. The query request may be in any appropriate form, such as a text form or an audio form.

In some embodiments, the query request may be input by the user into the electronic device 110.

At a block 220, the electronic device 110 displays a plurality of interactive questions associated with the query request.

In some embodiments, the plurality of interactive questions associated with the query request is generated based on the query request. In some embodiments, the plurality of interactive questions is configured to obtain additional information about the query request. As an example, the plurality of interactive questions may be used to guide the user to input more query detail information, so as to generate the target response content corresponding to this query request more accurately based on the query detail information.

In some embodiments, at least one of the plurality of interactive questions displayed by the electronic device 110 may be generated based on a first model deployed in the server 130. As an example, all of the plurality of interactive questions displayed by the electronic device 110 may be generated based on the first model deployed in the server 130. As another example, some of the plurality of interactive questions displayed by the electronic device 110 may be generated based on the first model deployed in the server 130, and other interactive questions may be generated based on other appropriate methods, for example, other interactive questions may be predetermined for the specific topic corresponding to this query request, etc.

The process of how to obtain at least one interactive question based on the first model is described below.

In some embodiments, the electronic device 110 may send the query request to the server 130. The server may generate first input information of the first model based on the received query request. The server 130 inputs the first input information into the first model, and first output information output by the first model may be obtained. The server 130 may determine at least one interactive question based on the first output information.

It should be understood that such a first model may include, for example, any appropriate machine learning model, which may be trained to perform an interactive question generation task, and the present disclosure is not intended to limit this.

In some embodiments, the electronic device may input the query request into the first model to obtain the at least one interactive question output by the first model.

In order to improve the accuracy of interactive question generation, in some embodiments, the first input information may further include, for example, a prompt for instructing the first model to generate.

As an example, the first input information may include setting information about the first model, and the setting information is associated with a topic of the query request. The setting information is used to indicate that the first model has a setting capability matching the setting information, so that the first model outputs an interactive question associated with the topic of the query request. The setting information may be setting information in the legal field, medical field, etc., which will not be repeated here.

As another example, the first input information may further include knowledge information. The knowledge information may be a knowledge base associated with the topic of the query request. The knowledge information is used to indicate the first model to output an interactive question associated with the topic of the query request based on information contained in the knowledge base associated with the topic of the query request.

In order to ensure the standardization and structuring of the output information of the first model, in some embodiments, the first input information may further include constraint information about the first output information of the first model. The constraint information includes at least a structured example of the first output information, which is used to indicate the first model to output a standardized or structured interactive question according to the constraint information. For example, this constraint information may indicate a format, a type, a size, a quantity, etc. of the output information generated by the first model.

In some embodiments, the first output information may indicate the at least one interactive question. The electronic device 110 may determine the at least one interactive question based on the first output information of the first model.

In the process of interacting with the user, the answer information input by the user for the previous interactive question is related to what the next interactive question is. In order to generate at least one interactive question more accurately, so as to obtain more query detail information based on these interactive questions, in some embodiments, the at least one interactive question generated by the server 130 may include a first interactive question and a second interactive question, where the second interactive question is generated based on the query request, the first interactive question and first answer information of the first interactive question.

How to display a plurality of interactive questions on the electronic device 110 is described below.

In some embodiments, the electronic device 110 may display, for the user, a plurality of question controls for obtaining answers to the plurality of interactive questions. The question control may be an input box for inputting the answer to the interactive question, or a selection control for each candidate answer.

As an example, the electronic device 110 may display, for the user, an input box for inputting the answer to the interactive question, so that the user inputs the answer to the interactive question into the input box. One interactive question may correspond to one input box.

As another example, the electronic device 110 may display, for each interactive question, a selection control for each candidate answer corresponding to the interactive question for the user, so that the user selects the corresponding answer by clicking the selection control. One interactive question may correspond to a plurality of candidate answers.

It should be noted that the first output information of the first model may further indicate a group of candidate answers to the at least one interactive question, where one interactive question corresponds to a group of candidate answers, that is, each candidate answer corresponding to each interactive question may be generated by the first model.

In some embodiments, the electronic device 110 may simultaneously display, for the user, a plurality of question controls for obtaining answers to the plurality of interactive questions.

For example, if the plurality of interactive questions include interactive question 1, interactive question 2 and interactive question 3, the electronic device 110 may simultaneously display question control 1 for obtaining the answer to interactive question 1, question control 2 for obtaining the answer to interactive question 2 and question control 3 for obtaining the answer to interactive question 3.

In some other embodiments, after the user inputs the answer to one of the plurality of interactive questions by using the first question control, the electronic device 110 may display, for the user, the second question control for inputting the answer to another question of the plurality of interactive questions, that is, the question controls for obtaining the answers to a respective interactive question may be displayed on the electronic device 110 one by one.

For example, if the plurality of interactive questions includes interactive question 1 and interactive question 2, the electronic device 110 may first display question control 1 for obtaining the answer to interactive question 1. After the electronic device 110 obtains the answer to interactive question 1 input by the user using question control 1, it displays question control 2 for the answer to interactive question 2.

As shown in FIG. 3, the electronic device 110 may present an interface 300A, for example, and the interface 300A may display interactive question 1. For example, for interactive question 1, the interface 300A may display that the selection control for the candidate answer corresponding to interactive question 1 includes the selection control 310 corresponding to the "first answer", the selection control 320 corresponding to the "second answer" and the selection control 330 corresponding to the "third answer". The user may select the answer to interactive question 1 by clicking the selection control corresponding to the candidate answer. For example, the user may select the selection control 330 corresponding to the "third answer".

After receiving the user's selection of the answer to interactive question 1, the electronic device 110 may display the interface 300B, which may display the question control corresponding to interactive question 2. For example, for interactive question 2, the interface 300B may display that the selection control for the candidate answer corresponding to interactive question 2 includes the selection control 340 corresponding to the "fourth answer" and the selection control 350 corresponding to the "fifth answer". The user may select the answer to interactive question 2 by clicking the selection control corresponding to the candidate answer. For example, the user may select the selection control 350 corresponding to the "fifth answer".

It should be noted that if some interactive questions in the at least one interactive question of the first model may be generated based on the answer information of other interactive questions, that is, the group of candidate answers to the at least one interactive question is not simultaneously indicated in the first output information output by the first model, but the first model outputs the first output information in real time, and this real-time first output information only indicates a group of candidate answers to some interactive questions, where the group of candidate answers to the some interactive questions may be part of the information corresponding to the target interactive question. Subsequently, the electronic device may continue to obtain real-time first input information based on the part of the information, and obtain the next real-time first output information output by the first model based on the real-time first output information and the first model, the next real-time first output information may also only indicate a group of candidate answers to some interactive questions, and the part of the information corresponding to the interactive questions indicated in each real-time first output information is different.

In order to improve the efficiency of interaction, in some embodiments, if the real-time first output information of the first model includes part of the information corresponding to the target interactive question, the electronic device may continue to obtain the real-time first input information and provide the question control corresponding to the target interactive question based on the part of the information, that is, the electronic device may display the question control corresponding to the target interactive question while generating part of the information corresponding to other interactive questions.

At a block 230, the electronic device 110 provides target response content for the query request.

In some embodiments, the electronic device 110 may provide the user with target response content determined based on the query request and the obtained answer information of each interactive question, where the answer information is determined based on the operation of the user.

In some other embodiments, the electronic device 110 may also provide initial response content for the query request to the user, and target response content determined based on the query request and the obtained answer information of a respective interactive question. The initial response content may be content obtained based on the query request before the answer to each interaction is obtained.

The interaction method of the present disclosure may be applied to any appropriate scenario, such as a search scenario, a dialogue scenario, etc., and the display mode of the initial response content is different for different scenarios.

As an example, in the search scenario, the initial response content may include search content provided on a search result page. The search content may be content obtained based on any appropriate method, for example, the search content may be content predetermined for this interactive question. The search result page may also display a plurality of question controls corresponding to the plurality of interactive questions. The user may input answer information corresponding to a respective interactive question based on the plurality of question controls corresponding to the plurality of interactive questions. The electronic device 110 may display, on the search result page, target response content generated based on the query request and the obtained answer information of the plurality of interactive questions.

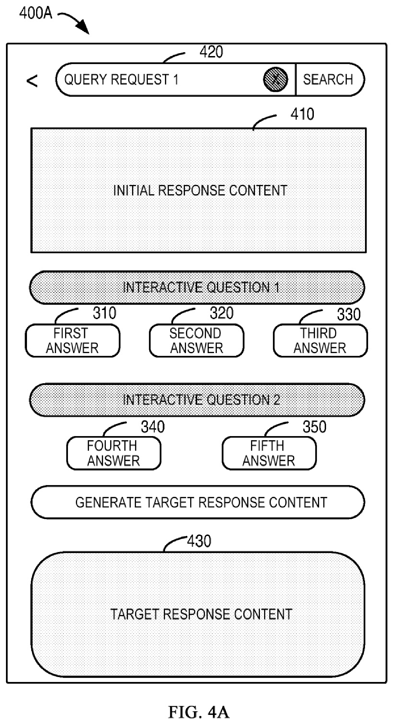

As shown in FIG. 4A, the electronic device 110 may present a search result page 400A, for example, and the search result page 400A may display initial response content 410, which is search content corresponding to query request 1 that is searched for after the user inputs query request 1 into the input box 420. The search result page may also display selection controls corresponding to a plurality of candidate answers corresponding to interactive question 1 and selection controls corresponding to a plurality of candidate answers corresponding to interactive question 2. For example, the selection control for the candidate answer corresponding to interactive question 1 includes the selection control 310 corresponding to the "first answer", the selection control 320 corresponding to the "second answer" and the selection control 330 corresponding to the "third answer". For interactive question 2, the interface 300B may display that the selection control for the candidate answer corresponding to interactive question 2 includes the selection control 340 corresponding to the "fourth answer" and the selection control 350 corresponding to the "fifth answer". For example, the user may select the answers to interactive question 1 and interactive question 2 by clicking the selection control 310 corresponding to the "first answer" and the selection control 340 corresponding to the "fourth answer". The electronic device 110 may display, on the search result page, target response content 430 generated based on query request 1, the "first answer" and the "fourth answer".

As another example, in the dialogue scenario, the initial response content may include a message displayed in a chat interface with a virtual object, and the chat interface further provides a plurality of question controls corresponding to the plurality of interactive questions, where the virtual object may be a non-player character. The user may input answer information corresponding to each interactive question based on the plurality of question controls corresponding to the plurality of interactive questions. The electronic device 110 may display, on the chat interface, target response content generated based on the query request and the acquired answer information of the plurality of interactive questions.

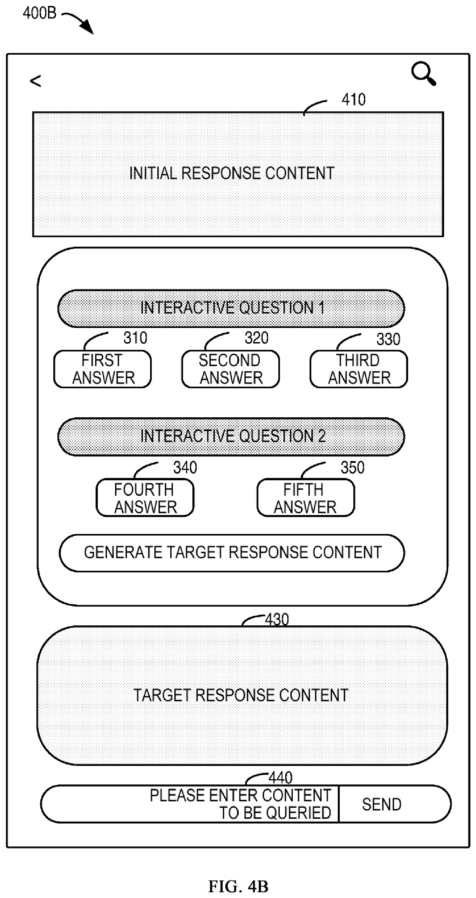

As shown in FIG. 4B, the electronic device 110 may present a chat interface 400B with the virtual object, for example, and the chat interface 400B may display initial response content 410, which may be response content corresponding to query request 1 that is obtained after the user inputs query request 1 into the input box 440. The chat interface may also display selection controls corresponding to a plurality of candidate answers corresponding to interactive question 1 and selection controls corresponding to a plurality of candidate answers corresponding to interactive question 2. For example, the chat interface 400B may display that the selection control for the candidate answer corresponding to interactive question 1 includes the selection control 310 corresponding to the "first answer", the selection control 320 corresponding to the "second answer" and the selection control 330 corresponding to the "third answer". For interactive question 2, the chat interface 400B may also display that the selection control for the candidate answer corresponding to interactive question 2 includes the selection control 340 corresponding to the "fourth answer" and the selection control 350 corresponding to the "fifth answer". For example, the user may select the answers to interactive question 1 and interactive question 2 by clicking the selection control 310 corresponding to the "first answer" and the selection control 340 corresponding to the "fourth answer". The electronic device 110 may display, on the search result page, target response content 430 generated based on query request 1, the "first answer" and the "fourth answer".

In some embodiments, the target response content may be generated based on a second model deployed in the server 130. The generation process of the target response content is described below.

In some embodiments, the server 130 may generate second input information of the second model based on the query request, the plurality of interactive questions and the answer information corresponding to the plurality of interactive questions. The server 130 may input the second input information into the second model, and may obtain second output information of the second model. The server 130 may determine the target response content for the query request based on the second output information of the second model.

It should be understood that such a second model may include, for example, any appropriate machine learning model, which may be trained to perform a response content generation task, and the present disclosure is not intended to limit this.

In some embodiments, the target response content may include text content, which is used to answer the question indicated by the query request.

In some other embodiments, the target response content may include text content and image content. The image content is used to depict a scene associated with the query request. For example, if the topic corresponding to the query request is a legal topic, the image content may be used to describe an image of a scene that matches the legal topic.

It should be noted that, in addition to the content in the form of text and image, the target response content may also be content in other forms, such as content in the form of audio or video, etc., which will not be repeated here.

According to the embodiments of the present disclosure, the target response content is generated based on the answer information of the plurality of interactive questions and the query request input by the user. The answer information of the plurality of interactive questions includes more query detail information, thereby improving the accuracy of the generated target response content. In addition, the target response content better meets the user's needs, and the user's interaction experience is improved.

### Example Apparatus and Device

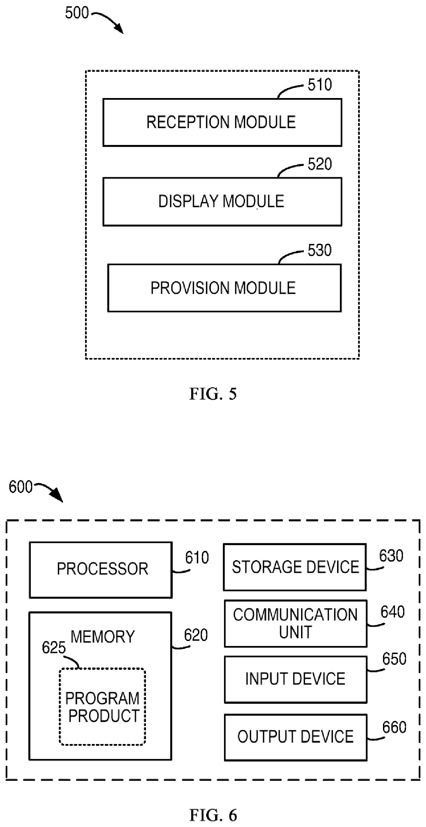

Embodiments of the present disclosure also provide corresponding apparatuses for implementing the above methods or processes. FIG. 5 illustrates a schematic structural block diagram of an example apparatus 500 for creating an application according to some embodiments of the present disclosure. The apparatus 500 may be implemented as or included in the electronic device 110. Each module/component in the apparatus 500 may be implemented by hardware, software, firmware, or any combination thereof.

As shown in FIG. 5, the apparatus 500 includes a reception module 510 configured to receive a query request from a user; a display module 520 configured to display a plurality of interactive questions associated with the query request, where the plurality of interactive questions is generated based on the query request; and a provision module 530 configured to provide target response content for the query request, the target response content being generated based on the query request and answer information for the plurality of interactive questions.

In some embodiments, the plurality of interactive questions are configured to acquire additional information about the query request.

In some embodiments, at least one of the plurality of interactive questions is generated by: generating first input information of a first model based on the query request; and determining the at least one interactive question based on first output information of the first model.

In some embodiments, the first output information of the first model further indicates a group of candidate answers to the at least one interactive question.

In some embodiments, the first input information includes setting information about the first model, and the setting information is associated with a topic of the query request.

In some embodiments, the first input information includes knowledge information, and the knowledge information includes a knowledge base associated with the topic of the query request.

In some embodiments, the first input information further includes constraint information about the first output information of the first model, and the constraint information includes at least a structured example of the first output information.

In some embodiments, the at least one interactive question includes a first interactive question, and a second interactive question in the plurality of interactive questions is generated based on the query request, the first interactive question and first answer information of the first interactive question.

In some embodiments, the display module 520 is further configured to simultaneously display, for the user, a plurality of question controls for obtaining answers to the plurality of interactive questions; or after the user inputs an answer to one of the plurality of interactive questions by using the first question control, display, for the user, the second question control for inputting an answer to another question of the plurality of interactive questions.

In some embodiments, the plurality of interactive questions is determined based on the first output information of the first model, and the display module 520 is further configured to provide, if the real-time first output information of the first model includes a part of the information corresponding to the target interactive question based on the part of the information while continuing to obtain the real-time first input information.

In some embodiments, the providing module 530 is further configured to provide initial response content for the query request to the user; and provide the target response content for the query request to the user based on the obtained answer information.

In some embodiments, the initial response content includes search content provided on a search result page.

In some embodiments, the initial response content includes a message displayed in a chat interface with a virtual object, and the chat interface further provides a plurality of question controls corresponding to the plurality of interactive questions.

In some embodiments, the target response content is generated by: generating second input information of a second model based on the query request, the plurality of interactive questions and the answer information; and determining the target response content for the query request based on second output information of the second model.

In some embodiments, the target response content includes text content and image content, the text content is used to answer the question indicated by the query request, and the image content is used to depict a scene associated with the query request.

FIG. 6 illustrates a block diagram of an electronic device 600 in which one or more embodiments of the present disclosure may be implemented. It should be understood that the electronic device 600 shown in FIG. 6 is only illustrative, and should not constitute any limitation to the functions and scope of the embodiments described herein. The electronic device 600 shown in FIG. 6 may be used to implement the electronic device 110 of FIG. 1.

As shown in FIG. 6, the electronic device 600 is in the form of a general electronic device. The components of the electronic device 600 may include but are not limited to one or more processing units or processors 610, a memory 620, a storage device 630, one or more communication units 640, one or more input devices 650, and one or more output devices 660. The processor 610 may be an actual or virtual processor and may perform various processing based on the program stored in the memory 620. In a multi-processor system, multiple processors execute computer-executable instructions in parallel to improve the parallel processing capability of the electronic device 600.

The electronic device 600 typically includes multiple computer storage media. Such media may be any available media that is accessible by the electronic device 600, including but not limited to volatile and non-volatile media, removable and non-removable media. The memory 620 may be a volatile memory (for example, a register, a cache, a random access memory (RAM)), a non-volatile memory (for example, a read-only memory (ROM), an electrically erasable programmable read-only memory (EEPROM), a flash memory), or any combination thereof. The storage device 630 may be a removable or non-removable medium, and may include a machine-readable medium such as a flash drive, a disk, or any other medium, which may be used to store information and/or data and may be accessed within the electronic device 600.

The electronic device 600 may further include other removable/non-removable, volatile/non-volatile storage media. Although not shown in FIG. 6, a disk drive for reading from or writing to a removable, non-volatile disk (such as a "floppy disk"), and an optical disk drive for reading from or writing to a removable, non-volatile optical disk may be provided. In these cases, each drive may be connected to the bus (not shown) by one or more data medium interfaces. The memory 620 may include a computer program product 625, which has one or more program modules configured to perform various methods or actions of the various embodiments of the present disclosure.

The communication unit 640 implements communication with other electronic devices through communication media. Additionally, the functions of the components of the electronic device 600 may be implemented in a single computing cluster or multiple computing machines, which may communicate through communication connections. Therefore, the electronic device 600 may use a logical connection with one or more other servers, a network personal computer (PC) or another network node to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may also communicate with one or more external devices (not shown) as needed through the communication unit 640, the external devices such as a storage device, a display device, etc., communicate with one or more devices that allow the user to interact with the electronic device 600, or communicate with any device (for example, a network card, a modem, etc.) that allows the electronic device 600 to communicate with one or more other electronic devices. Such communication may be performed via input/output (I/O) interfaces (not shown).

According to an illustrative implementation of the present disclosure, a computer-readable storage medium is provided, on which computer-executable instructions are stored, where the computer-executable instructions are executed by a processor to implement the method described above. According to an illustrative implementation of the present disclosure, a computer program product is further provided, the computer program product is tangibly stored on a non-transitory computer-readable medium and includes computer-executable instructions, and the computer-executable instructions are executed by a processor to implement the method described above.

Various aspects of the present disclosure are described herein with reference to flowcharts and/or block diagrams of methods, apparatuses, devices, and computer program products implemented according to the present disclosure. It should be understood that each block of the flowchart and/or block diagram, and each combination of blocks in the flowchart and/or block diagram may be implemented by computer-readable program instructions.

These computer-readable program instructions may be provided to the processing unit of a general-purpose computer, a special-purpose computer, or other programmable data processing apparatuses to produce a machine, so that when these instructions are executed by the processing unit of the computer or other programmable data processing apparatuses, an apparatus for implementing the functions/actions specified in one or more blocks of the flowchart and/or block diagram is produced. These computer-readable program instructions may also be stored in a computer-readable storage medium, and these instructions cause the computer, the programmable data processing apparatus, and/or other devices to work in a specific manner, so that the computer-readable medium storing the instructions includes a manufactured product, which includes instructions for implementing various aspects of the functions/actions specified in one or more blocks of the flowchart and/or block diagram.

The computer-readable program instructions may be loaded onto a computer, other programmable data processing apparatuses, or other devices, so that a series of operations and steps are performed on the computer, other programmable data processing apparatuses, or other devices to produce a computer-implemented process, thereby enabling the instructions executed on the computer, other programmable data processing apparatuses, or other devices to implement the functions/actions specified in one or more blocks of the flowchart and/or block diagram.

The flowchart and block diagram in the drawings show the possibly implemented architectures, functions and operations of the system, method and computer program product according to multiple implementations of the present disclosure. In this regard, each block in the flowchart or block diagram may represent a module, program segment or part of instructions, and the module, program segment or part of instructions contains one or more executable instructions for implementing the specified logical functions. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or flowchart, and each combination of blocks in the block diagram and/or flowchart may be implemented by a special-purpose hardware-based system that performs specified functions or actions, or by a combination of special-purpose hardware and computer instructions.

The implementations of the present disclosure have been described above, and the above description is illustrative, non-exhaustive, and not limited to the disclosed implementations. Without departing from the scope and spirit of the described implementations, many modifications and changes will be apparent to those of ordinary skill in the art. The selection of terms used herein is intended to best explain the principles of the implementations, the practical applications, or the improvements to the technologies in the market, or to enable other ordinary skilled persons in the art to understand the implementations disclosed herein.

## Claims

1. A method for interaction, comprising:
receiving a query request from a user;
displaying a plurality of interactive questions associated with the query request, wherein the plurality of interactive questions is generated based on the query request; and
providing target response content for the query request, the target response content being generated based on the query request and answer information for the plurality of interactive questions.

2. The method of claim 1, wherein at least one of the plurality of interactive questions is generated by:
generating first input information of a first model based on the query request; and
determining the at least one interactive question based on first output information of the first model.

3. The method of claim 2, wherein the first output information of the first model further indicates a group of candidate answers to the at least one interactive question.

4. The method of claim 2, wherein the first input information comprises setting information about the first model, the setting information being associated with a topic of the query request.

5. The method of claim 2, wherein the first input information comprises knowledge information, the knowledge information comprising a knowledge base associated with the topic of the query request.

6. The method of claim 2, wherein the first input information further comprises constraint information about the first output information of the first model, the constraint information comprising at least a structured example about the first output information.

7. The method of claim 2, wherein the at least one interactive question comprises a first interactive question, and a second interactive question in the plurality of interactive questions is generated based on the query request, the first interactive question and first answer information of the first interactive question.

8. The method of claim 1, wherein the plurality of interactive questions are configured to obtain additional information about the query request.

9. The method of claim 1, wherein displaying the plurality of interactive questions associated with the query request comprises:
simultaneously displaying, for the user, a plurality of question controls for obtaining answers to the plurality of interactive questions; or
displaying, for the user and after the user inputs an answer to one of the plurality of interactive questions by using a first question control, a second question control for inputting an answer to another question of the plurality of interactive questions.

10. The method of claim 1, wherein the plurality of interactive questions is determined based on first output information of a first model, and displaying the plurality of interactive questions associated with the query request comprises:
providing, in accordance with that real-time first output information of the first model comprises a part of information corresponding to a target interactive question, a question control corresponding to the target interactive question based on the part of the information while continuing to obtain the real-time first input information.

11. The method of claim 1, wherein providing response content for the query request comprises:
providing initial response content for the query request to the user; and
providing the target response content for the query request to the user based on the obtained answer information.

12. The method of claim 11, wherein the initial response content comprises search content provided on a search result page.

13. The method of claim 11, wherein the initial response content comprises a message displayed in a chat interface with a virtual object, and the chat interface further provides a plurality of question controls corresponding to the plurality of interactive questions.

14. The method of claim 1, wherein the target response content is generated by:
generating second input information of a second model based on the query request, the plurality of interactive questions and the answer information; and
determining the target response content for the query request based on second output information of the second model.

15. The method of claim 1, wherein the target response content comprises text content and image content, the text content answering a question indicated by the query request, and the image content depicting a scene associated with the query request.

16. An apparatus for interaction, comprising:
a reception module configured to receive a query request from a user;
a display module configured to display a plurality of interactive questions associated with the query request, wherein the plurality of interactive questions is generated based on the query request; and
a provision module configured to provide target response content for the query request, the target response content being generated based on the query request and answer information for the plurality of interactive questions.

17. An electronic device, comprising:
at least one processor; and
at least one memory, the at least one memory being coupled to the at least one processor and storing instructions executable by the at least one processor, the instructions, when executed by the at least one processor, causing the electronic device to perform the method of any of claims 1 to 15.

18. A computer-readable storage medium having computer-executable instructions stored thereon, the computer-executable instructions being executable by a processor to implement the method of any of claims 1 to 15.

19. A computer program product comprising computer-executable instructions, wherein the computer-executable instructions, when executed by a processor, implement the method of any of claims 1 to 15.
